# EUROPEAN PATENT APPLICATION

(11) **EP 3 911 037 A1**
(43) Date of publication of application: **17.11.2021**
(21) Application number: 19908894.9
(22) Date of filing: 09.01.2019
(51) Int. Cl.: H04W 52/16, H04W 52/24, H04W 72/04

(54) **USER TERMINAL AND WIRELESS COMMUNICATION METHOD**

(71) Applicant: NTT DOCOMO, INC., Chiyoda-ku, Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2019/000390
(87) International publication number: WO 2020/144773

(57) **Abstract**

A user terminal according to one aspect of the present disclosure includes a control section that determines transmission power of a physical uplink shared channel (PUSCH) based on a pathloss value estimated using a plurality of reference signals associated with a certain uplink channel or uplink reference signal, and a transmitting section that transmits the PUSCH by using the transmission power. According to one aspect of the present disclosure, beam relevant control can be appropriately performed.

## Description

### Technical Field

The present disclosure relates to a user terminal and a radio communication method in next-generation mobile communication systems.

### Background Art

In Universal Mobile Telecommunications System (UMTS) networks, the specifications of Long-Term Evolution (LTE) have been drafted for the purpose of further increasing high speed data rates, providing lower latency, and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Rel. 15 NR supports operation regarding beam forming. It has been assumed that a beam having been under study on Rel. 15 NR corresponds to a narrow beam. In a case of performing communication by using such a narrow beam, beam displacement (beam mismatch) might cause critical degradation of performance.

For this reason, it is considered that utilization of a robust wide beam compared to the narrow beam is appropriate for reduction of mismatch as described above. However, in NR, no study has been conducted on a method utilizing the above-described robust wide beam. As long as this point cannot be clearly defined, inconsistency between a base station and a UE is caused about beam-relevant control, and there is a probability that communication throughput is degraded.

For this reason, an object of the present disclosure is to provide a user terminal and a radio communication method that can properly perform beam relevant control.

### Solution to Problem

A user terminal according to one aspect of the present disclosure includes a control section that determines transmission power of a physical uplink shared channel (PUSCH) based on a pathloss value estimated using a plurality of reference signals associated with a certain uplink channel or uplink reference signal, and a transmitting section that transmits the PUSCH by using the transmission power.

### Advantageous Effects of Invention

According to one aspect of the present disclosure, beam relevant control can be properly performed.

### Brief Description of Drawings

FIG. 1 is a view to show an example of a combined beam provided by the present disclosure;
FIG. 2 is a diagram to show an example of mapping of SSB and PRACH in a first embodiment;
FIG. 3 is a diagram to show an example of another mapping of SSB and PRACH in the first embodiment;
FIG. 4 is a diagram to show an example of a TCI state for configuring QCL properties for PDCCH in Embodiment 2-1;
FIG. 5 is a diagram to show an example of a TCI state for configuring QCL properties for PDCCH in Embodiment 2-2;
FIG. 6 is a diagram to show an example of a schematic structure of a radio communication system according to one embodiment;
FIG. 7 is a diagram to show an example of a structure of a base station according to one embodiment;
FIG. 8 is a diagram to show an example of a structure of a user terminal according to one embodiment; and
FIG. 9 is a diagram to show an example of a hardware structure of the base station and the user terminal according to one embodiment.

### Description of Embodiments

### (TCI, Spatial Relation, QCL)

For NR, control of reception processing (e.g., at least one of reception, de-mapping, demodulation, or decoding) and transmission processing (e.g., at least one of transmission, mapping, precoding, modulation, or coding) in a UE of at least one of a signal or a channel (referred to as a "signal/channel") based on a transmission configuration indication state (a TCI state) has been under study.

The TCI state may represent one applied to a downlink signal/channel. One equivalent to a TCI state applied to an uplink signal/channel may be represented as a spatial relation.

The TCI state is information about the quasi-co-location (QCL) of the signal/channel, and may be referred to as a spatial reception parameter, spatial relation information (SRI), and the like. The TCI state may be configured for the UE for every channel or signal.

QCL is an index indicating statistical properties of the signal/channel. For example, it may mean that it can be assumed that in a case where a certain signal/channel and other signals/channels are in a QCL relationship, these different multiple signals/channels are the same in terms of at least one of a doppler shift, a doppler spread, an average delay, a delay spread, or a spatial parameter (e.g., the spatial reception parameter (a spatial Rx parameter)) (QCL in at least one of these).

Note that the spatial reception parameter may correspond to a reception beam (e.g., a reception analog beam) of the UE, and the beam may be specified based on spatial QCL. QCL (or at least one element of QCL) in the present disclosure may be interpreted as sQCL (spatial QCL).

Multiple types (QCL types) of QCL may be defined. For example, four QCL types A to D having different parameters (or parameter sets) may be provided, the parameter being assumed to be the same, and these parameters will be described below:
- QCL Type A: the doppler shift, the doppler spread, the average delay, and the delay spread;
- QCL Type B: the doppler shift and the doppler spread;
- QCL Type C: the doppler shift and the average delay; and
- QCL Type D: the spatial reception parameter.

The UE assuming that a given control resource set (CORESET), channel, or reference signal is in a specific QCL (e.g., the QCL type D) relation with another CORESET, channel, or reference signal may be referred to as QCL assumption.

The UE may determine, based on the TCI state of the signal/channel or the QCL assumption, at least one of a transmission beam (a Tx beam) or a reception beam (a Rx beam) of the signal/channel.

The TCI state may be, for example, information about QCL between a target channel (or a reference signal (RS) for such a channel) and another signal (e.g., another downlink reference signal (DL-RS)). The TCI state may be configured (indicated) by higher layer signaling, physical layer signaling, or a combination thereof.

In the present disclosure, for example, the higher layer signaling may be any one or combinations of radio resource control (RRC) signaling, medium access control (MAC) signaling, broadcast information, and the like.

For example, the MAC signaling may use MAC control elements (MAC CE), MAC Protocol Data Units (PDUs), and the like. For example, the broadcast information may be master information blocks (MIBs), system information blocks (SIBs), minimum system information (remaining minimum system information (RMSI)), other system information (OSI), and the like.

The physical layer signaling may be, for example, downlink control information (DCI).

The channel for which the TCI state is configured (specified) may be, for example, at least one of a downlink shared channel (a physical downlink shared channel (PDSCH)), a downlink control channel (a physical downlink control channel (PDCCH), an uplink shared channel (a physical uplink shared channel (PUSCH)), or an uplink control channel (a physical uplink control channel (PUCCH)).

RS in the QCL relation with such a channel may be, for example, at least one of a synchronization signal block (SSB), a channel state information reference signal (CSI-RS), or a reference signal for measurement (a sounding reference signal (SRS)).

The SSB is a signal block including at least one of a primary synchronization signal (PSS), a secondary synchronization signal (SSS), or a broadcast channel (a physical broadcast channel (PBCH)). The SSB may be referred to as an SS/PBCH block.

An information element ("TCI-state IE" of RRC) of the TCI state configured by the higher layer signaling may include one or more pieces of QCL information ("QCL-Info"). The QCL information may include at least one of information (DL-RS relevant information) about DL-RS in the QCL relation or information (QCL type information) indicating the QCL type. The DL-RS relevant information may include information such as a DL-RS index (e.g., an SSB index, a non-zero-power (NZP) CSI-RS resource ID), an index of a cell at which RS is located, and an index of a bandwidth part (BWP) at which RS is located.

### <TCI State for PDCCH>

Information about QCL of PDCCH (or a demodulation reference signal (DMRS) antenna port associated with PDCCH) and given DL-RS may be referred to as a TCI state for PDCCH, for example.

The UE may determine the TCI state for PDCCH(CORESET) specific to the UE, based on the higher layer signaling. For example, for the UE, one or more (K) TCI states may be configured for each CORESET by RRC signaling.

The UE may activate the TCI state according to a MAC CE for each CORESET. The MAC CE may be referred to as a TCI state indication for UE-specific PDCCH MAC CE. The UE may monitor a CORESET based on the active TCI state corresponding to such

### CORESET.

### <TCI State for PDSCH>

Information about QCL of PDSCH (or a DMRS antenna port associated with PDSCH) and a given DL-RS may be referred to as a TCI state for PDSCH, for example.

For the UE, M (M ≥ 1) TCI states for PDSCH (M pieces of QCL information for PDSCH) may be reported (configured) by higher layer signaling. Note that the number M of TCI states configured for UE may be limited by at least one of the UE capability or the QCL type.

DCI used for scheduling of PDSCH may include a given field (may be referred to as, for example, a TCI field or a TCI state field) indicating the TCI state for PDSCH. The DCI may be used for scheduling of PDSCH of one cell, and for example, may be referred to as DL DCI, DL assignment, DCI format 1_0, or DCI format 1_1.

Control on whether or not the TCI field is included in DCI may be performed using information signaled from a base station to a UE. Such information may be information (TCI-PresentInDCI) indicating whether or not the TCI field is present (present or absent) in DCI. Such information may be configured for UE by the higher layer signaling, for example.

In a case where the TCI states exceeding eight types are configured for UE, the eight types of TCI states or less may be activated (or specified) using a MAC CE. The MAC CE may be referred to as TCI states activation/deactivation for UE-specific PDSCH MAC CE. The value of the TCI field in DCI may indicate one of the TCI states activated by MAC CE.

In a case where time offset between reception of DL DCI and reception of PDSCH corresponding to such DCI is equal to or greater than a given threshold, the UE may assume that the DM-RS ports of PDSCH of a serving cell are QCLed with the RS(s) in the TCI state with respect to the QCL type parameter(s) given by the TCI state indicated by the DCI ("the DM-RS ports of PDSCH of a serving cell are quasi co-located with the RS(s) in the TCI state with respect to the QCL type parameter(s) given by the indicated TCI state").

Time offset between reception of DL DCI and reception of PDSCH corresponding to such DCI may be referred to as scheduling offset.

The above-described given threshold may be referred to as a "threshold," a "threshold for offset between a DCI indicating a TCI state and a PDSCH scheduled by the DCI," a "threshold-sched-offset," a schedule offset threshold, a scheduling offset threshold, or the like.

The scheduling offset threshold may be based on the UE capability, and, for example, may be based on delay in decoding of PDCCH and beam switching. Information on the scheduling offset threshold may be configured using the higher layer signaling from the base station, or may be transmitted from the UE to the base station.

In a case where the scheduling offset is less than the scheduling offset threshold, the UE may assume that the DM-RS ports of PDSCH of a serving cell are QCLed with the RS(s) in the TCI state with respect to the QCL parameter(s) used for PDCCH QCL indication corresponding to the lowest CORESET-ID in the latest slot in which one or more CORESETs within the active BWP of the serving cell are configured for the UE (the DM-RS ports of PDSCH of a serving cell are quasi co-located with the RS(s) in the TCI state with respect to the QCL parameter(s) used for PDCCH quasi co-location indication of the lowest CORESET-ID in the latest slot in which one or more CORESETs within the active BWP of the serving cell are configured for the UE).

For example, the UE may assume that the DM-RS port of PDSCH is QCLed with the DL-RS(s) based on the TCI state activated for CORESET corresponding to the lowest CORESET-ID. The latest slot may be, for example, a slot receiving DCI scheduling the PDSCH.

Note that the CORESET-ID may be an ID (an ID for identifying a CORESET) configured by an RRC information element "ControlResourceSet."

### <Spatial Relation Information for PUCCH/SRS>

Spatial relation information (a "PUCCH-SpatialRelationInfo" information element of RRC) between a given RS and a PUCCH may be included in PUCCH configuration information (a "PUCCH-Config" information element of RRC). Spatial relation information (an "SRS-SpatialRelationInfo" information element of RRC) between a given RS and an SRS may be included in SRS resource configuration information (an "SRS-Resource" information element of RRC).

These types of spatial relation information may include, as the index of the above-described given RS, at least one of an SSB index, a CSI-RS resource ID, and an SRS resource ID. These types of spatial relation information may include a serving cell index, a BWP index (BWP ID), and the like corresponding to the above-described given RS.

Note that in the present disclosure, the SSB index, the SSB resource ID, and an SSB resource indicator (SSBRI) may be interchangeably interpreted. The CSI-RS index, the CSI-RS resource ID, and a CSI-RS resource indicator (CRI) may be interchangeably interpreted. The SRS index, the SRS resource ID, and SRI may be interchangeably interpreted.

In a case where the spatial relation information between an SSB or a CSI-RS and a PUCCH (SRS) is configured, the UE may transmit the PUCCH (SRS) by using the same spatial domain filter as a spatial domain filter for reception of SSB or CSI-RS. In other words, in this case, the UE may assume that a UE reception beam of SSB or CSI-RS and a UE transmission beam of PUCCH (SRS) are the same as each other.

In a case where the spatial relation information between an SRS and a PUCCH (another SRS) is configured, the UE may transmit the PUCCH (another SRS) by using the same spatial domain filter as a spatial domain filter for transmission of the SRS. In other words, in this case, the UE may assume that a UE transmission beam of SRS is the same as a UE transmission beam of PUCCH (another

### SRS) .

Note that a spatial domain filter for transmission of the base station, a downlink spatial domain transmission filter, and a transmission beam of the base station may be interchangeably interpreted. A spatial domain filter for reception of the base station, an uplink spatial domain receive filter, and a reception beam of the base station may be interchangeably interpreted.

A spatial domain filter for transmission by the UE, an uplink spatial domain transmission filter, and the transmission beam of the UE may be interchangeably interpreted. A spatial domain filter for reception of the UE, a downlink spatial domain receive filter, and the reception beam of the UE may be interchangeably interpreted.

In a case where more than one piece of spatial relation information about PUCCH are configured, control is performed such that one PUCCH spatial relation is active for one PUCCH resource in given time by PUCCH spatial relation activation/deactivation

### MAC CE.

The MAC CE may include at least one of information such as a serving cell ID of an application target, a BWP ID, a PUCCH resource ID, and a PUCCH spatial relation information ID, and so on.

### <Spatial Relation Information for PUSCH>

The spatial relation information for PUSCH may be determined based on an SRS resource indicator (SRI) field included in DCI. Based on specified SRI, the UE may transmit PUSCH by using the same transmission beam as that of corresponding SRS of SRSs configured by a higher layer.

Note that in the present disclosure, an SRS resource indicator (SRI) and the spatial relation information (SRI) may be interchangeably interpreted.

### (Beam Forming)

Rel. 15 NR supports operation regarding beam forming. For example, the UE may identify (or detect) one SSB (or one CSI-RS) defining a cell (or specific to a cell), and may transmit a random access channel (a physical random access channel (PRACH)) associated with the one SSB (or the one CSI-RS) described above.

The UE may receive a PDCCH by using a CORESET associated with the one SSB (or the one CSI-RS) described above, or may receive PDCCH by using one active TCI state. The UE may receive a PDSCH based on a CORESET that is QCLed with the PDSCH, or may receive the PDSCH by using one active TCI state.

The UE may transmit a PUCCH based on a CORESET that is QCLed with the PUCCH, or may transmit the PUCCH by using one active spatial relation information (SRI). The UE may transmit a PUSCH based on a CORESET that is QCLed with the PUSCH, or may transmit the PUSCH by using one active SRI.

Note that "based on a CORESET that is QCLed with X" may mean, for example, that "assume that X is QCLed with a CORESET" or "based on a reception beam of a CORESET."

It has been assumed that a beam having (or including) one RS for a given QCL type and having been studied on Rel. 15 NR corresponds to a narrow beam. However, in a case of communication using the narrow beam, beam displacement (beam mismatch) might cause critical degradation of performance.

Meanwhile, in NR, use cases (service types) such as enhanced mobile broadband (eMBB), machine type communications for implementing multiple simultaneous access (massive machine type communications (mMTC)), and ultra-reliable and low-latency communications (URLLC) have been assumed.

It is considered that in URLLC, particularly URLLC in indoor environment, such as industrial internet of things (IoT) (IIoT), a robust wide beam as compared to the above-described narrow beam having been studied is appropriate for reduction of the above-described mismatch.

However, no study has been conducted for NR on a method utilizing the above-described robust wide beam. As long as this point cannot be clearly defined, inconsistency between the base station and the UE is caused about beam-relevant control, and there is a probability that communication throughput is degraded.

For these reasons, the inventors of the present invention came up with the idea of using, as the wide beam, a beam (a beam obtained by combination of beams of RSs, which may be referred to as a combined beam or the like) having a plurality of RSs corresponding to the QCL type. The UE performs the reception processing for each of all beams of the plurality of RSs, thereby obtaining an effect that the wide beam is received.

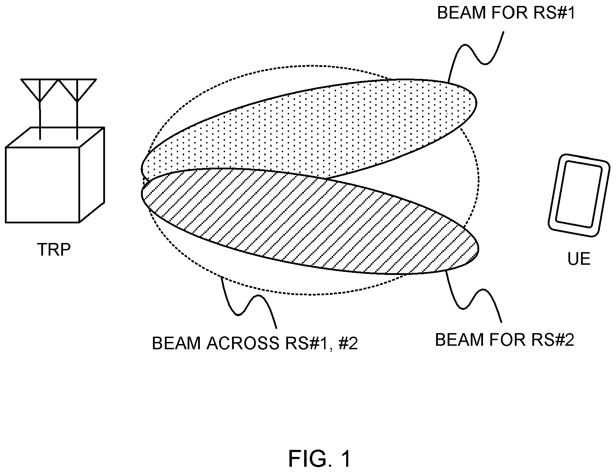

FIG. 1 is a view to show an example of the combined beam provided by the present disclosure. In this example, a transmission/reception point (TRP) (e.g., the base station) transmits the beam to the UE.

In this example, a beam for RS #1 (a beam applied to RS #1) and a beam for RS #2 are different from each other. From the viewpoint of UE, it may be assumed that RS #1 and RS #2 are transmitted using a beam across RS #1, RS #2 as shown in the figure.

Embodiments according to the present disclosure will be described in detail with reference to the drawings as follows. The radio communication method according to each embodiment may be employed independently or may be employed in combination.

Hereinafter, the "SSB" may be interpreted as "at least one of SSB and CSI-RS, "DL RS" (DL RS may include, for example, at least one of SSB, CSI-RS, and other reference signals), or the like. A "plurality of SSBs" may be interpreted as "at least one of a plurality of SSBs and a plurality of CSI-RSs (also including combinations of one or more SSBs and one or more CSI-RSs)."

### (Radio Communication Method)

### <First Embodiment>

A first embodiment relates to a relation between an SSB and a PRACH. For example, one-to-one mapping that one SSB corresponds to one PRACH resource and multiple-to-one mapping that a plurality of SSBs correspond to one PRACH resource are assumed.

In the one-to-one mapping, the UE may select one SSB for at least one of initial access or random access, and may transmit a PRACH by using a PRACH resource associated with the selected SSB. Note that the PRACH may be interpreted as a random access preamble.

Note that selection of SSB in the present disclosure may be performed based on at least one of a received power (for example, a reference signal received power (RSRP)), a received quality (for example, a reference signal received quality (RSRQ), a signal to interference plus noise ratio (SINR), a signal to noise ratio (SNR)), a signal strength (for example, a received signal strength indicator (RSSI)), and so on.

In the present disclosure, the UE may specify the PRACH resource by using at least one of time and frequency resources for the PRACH or at least one of a PRACH preamble sequence, a PRACH index (a preamble index), a PRACH configuration ID, and the like. The PRACH resource in the present disclosure may be interpreted as these parameters (e.g., the preamble index) for specifying the PRACH resource.

In the multiple-to-one mapping, the UE selects one SSB or a set of plurality of SSBs (a set of SSBs) for at least one of the initial access or the random access. In a case where the UE selects one SSB, a PRACH may be transmitted using the PRACH resource associated with the selected SSB. In a case where the UE selects a set of plurality of SSBs, a PRACH may be transmitted using the PRACH resource associated with the selected set of plurality of SSBs.

In a case where the UE fails to determine which SSB is better (e.g., measurement results of a plurality of SSBs are substantially the same (a difference(s) is equal to or less than a given threshold)), the UE may select a set of plurality of SSBs.

In a case where the UE finds more than one SSB with a sufficient quality (at least one of RSRP, RSRQ, RSSI, SINR, and the like is greater than a given threshold), the UE may select a set of plurality of SSBs including these SSBs.

The UE may be configured (or indicated) with not only the PRACH resource associated with one SSB but also the PRACH resource associated with a set of plurality SSBs by higher layer signaling, physical layer signaling, or a combination thereof.

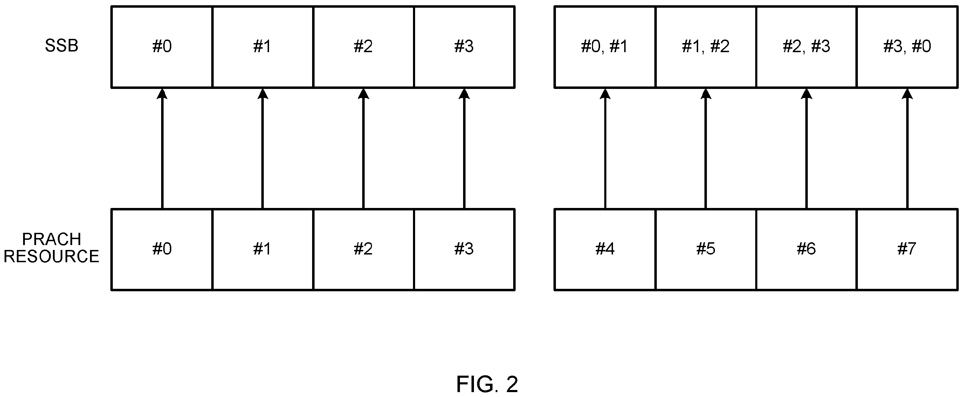

FIG. 2 is a diagram to show an example of mapping of SSB and PRACH in the first embodiment. In this example, PRACH resources #0, #1, #2, and #3 are associated with SSBs #0, #1, #2, and #3, respectively, in one-to-one correspondence.

PRACH resource #4 is associated with SSBs #0 and #1. PRACH resource #5 is associated with SSBs #1 and #2. PRACH resource #6 is associated with SSBs #2 and #3. PRACH resource #7 is associated with SSBs #3 and #0.

For example, in a case where the UE determines that only one of SSBs #0 to #3 has a sufficient quality or a case where the UE determines that only one of SSBs #0 to #3 clearly has a favorable quality, the UE transmits a PRACH by using one of PRACH resources #0 to #3 corresponding to the one SSB.

In a case where the UE determines that two of SSBs #0 to #3 have a sufficient quality, the UE transmits a PRACH by using one of PRACH resources #4 to #7 corresponding to the two SSBs.

Note that the example where a set of two SSBs is associated with one PRACH has been described, but the number of SSBs associated with one PRACH may be more than two.

Note that even in a case where the one-to-one mapping is configured, the UE may select a set of plurality of SSBs for at least one of the initial access or the random access. Here, in a case where the UE selects a set of plurality of SSBs, the UE may transmit a plurality of PRACHs by using the PRACH resources each associated with the selected set of plurality of SSBs. In this case, even when the multiple-to-one mapping of SSB and PRACH is not configured, the UE can transmit the PRACHs with respect to the plurality of SSBs, based on the one-to-one mapping.

In a case where the UE selects a set of plurality of SSBs, the PRACHs transmitted using the PRACH resources corresponding to respective SSBs may be associated with each other. For example, in a case where the UE selects a first SSB set and a second SSB set, at least one of a preamble sequence and a PRACH time and frequency resource transmitted by a PRACH resource corresponding to the first SSB may be associated with at least one of a preamble sequence and a PRACH time and frequency resource transmitted by a PRACH resource corresponding to the second SSB.

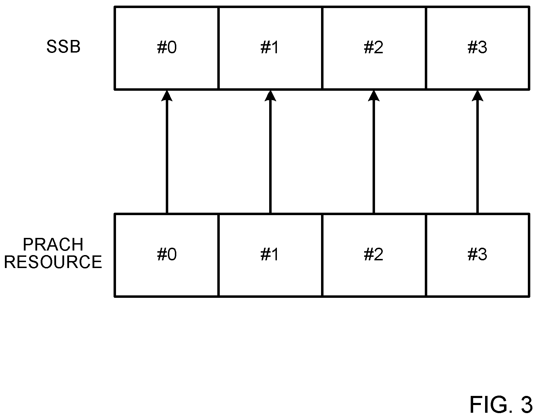

FIG. 3 is a diagram to show an example of another mapping of SSB and PRACH in the first embodiment. In this example, PRACH resources #0, #1, #2, and #3 are associated with SSBs #0, #1, #2, and #3, respectively, in one-to-one correspondence. Unlike FIG. 2, there is no PRACH resource associated with the plurality of SSBs.

For example, in a case where the UE determines that two of SSBs #0 to #3 have a sufficient quality, the UE transmits two PRACHs by using PRACH resources #0 to #3 corresponding to the two SSBs, respectively.

Note that the UE may apply a beam (a combined beam) obtained by combination of transmission beams applied to PRACH transmission using the PRACH resource corresponding to the plurality of SSBs, respectively, to PRACH transmission using one or more PRACH resources associated with the set of plurality of SSBs.

For example, for transmission of PRACH resource #4 of FIG. 2, the UE may use a beam obtained by combination of a beam used for transmission of PRACH resource #0 associated with SSB #0 and a beam used for transmission of PRACH resource #1 associated with SSB #1.

In a case where the UE determines that SSBs #0 and #1 have a sufficient quality in FIG. 3, the UE may transmit both of the PRACH resources #0 and #1 by using the beam obtained by combination of the beam used for transmission of PRACH resource #0 associated with SSB #0 and the beam used for transmission of PRACH resource #1 associated with SSB #1.

Note that the UE may perform such control that selection of a set of plurality of SSBs or transmission using the PRACH resource is performed within a given period. Here, the given period may be a period after one SSB is selected, for example. The given period may be a period until the start of a random access response (RAR) window for a PRACH after transmission of the PRACH. The given period may be configured by, e.g., the higher layer signaling.

For example, in a case where the one-to-one mapping is configured, when the UE first transmits a PRACH by PRACH resource #0 corresponding to SSB #0 and thereafter transmits a PRACH by PRACH resource #1 corresponding to SSB #1 until the start of the RAR window for the PRACH, a base station may assume that the UE determines that both SSB #0 and SSB #1 have a sufficient quality.

With this configuration, even in a case where the plurality of PRACHs are transmitted based on selection of a set of plurality of SSBs by the UE, the base station can appropriately appreciate that the plurality of PRACHs indicate selection of a set of plurality of SSBs.

### [PRACH Transmission Power]

In a case where the UE selects a set of plurality of SSBs, transmission power for PRACH using one or more PRACH resources corresponding to the set of plurality of SSBs may be determined based on a pathloss value PL estimated using the set of plurality of SSBs.

Here, the pathloss value used for determination of the PRACH transmission power may be a specific value based on a plurality of pathloss values estimated by each of the plurality of SSBs. For example, the specific value may be the maximum value of the plurality of pathloss values, the minimum value of the plurality of pathloss values, the average of the plurality of pathloss values, an arbitrary value between the minimum value and the maximum value, or an arbitrary value of the plurality of pathloss values.

### [RAR]

In a case where the UE selects the plurality of SSBs and transmits a PRACH corresponding to the plurality of SSBs, the base station may transmit a PDCCH (DCI) for scheduling a RAR for the PRACH, and may transmit the RAR by a PDSCH. The UE may assume that the PDCCH and the RAR (PDSCH) have the same QCL properties as those of the selected plurality of SSBs (according to the same QCL assumption).

After receiving the above-described RAR, the UE transmits a PUSCH according to a UL grant field included in the RAR. Here, the UE may transmit the PUSCH by using the same QCL (may be referred to as SRI or a transmit filter) as that used for transmission of one or more PRACHs as described above. In a case of CBRA, the PUSCH may include message 3.

According to the first embodiment described above, the UE can preferably transmit a PRACH in association with the combined beam across the plurality of RSs. The PRACH may be transmitted using the combined beam.

### <Second Embodiment>

A second embodiment relates to reception of a PDCCH. A UE may be configured with one or more TCI states for a CORESET.

The second embodiment is broadly classified as follows: one active TCI state is provided for a certain CORESET (Embodiment 2-1); and more than one active TCI state is allowed for a certain CORESET (Embodiment 2-2).

### <Embodiment 2-1>

In Embodiment 2-1, at least one of the configured TCI states may include (in other words, may be associated with) any or all of more than one RS for the QCL type A and more than one RS for the QCL type D.

In Embodiment 2-1, as long as one TCI state is configured, the one TCI state may be active after RRC connection. When more than one TCI state are configured, any of the more than one TCI state may be activated using a MAC CE.

In a case where a certain TCI state includes one or more RSs for the QCL type A or D and the certain TCI state is active in a CORESET, the UE may assume that a DMRS for PDCCH of the CORESET has the same QCL properties as those of all RSs in the TCI state with respect to the corresponding QCL type.

Here, the DMRS for PDCCH having the same QCL properties as those of the plurality of RSs may mean that the UE receives the DMRS (and PDCCH), based on the QCL properties of the plurality of RSs. In other words, the UE may assume that in a CORESET, a DMRS antenna port associated with PDCCH reception is QCLed with the plurality of RSs in terms of the QCL properties.

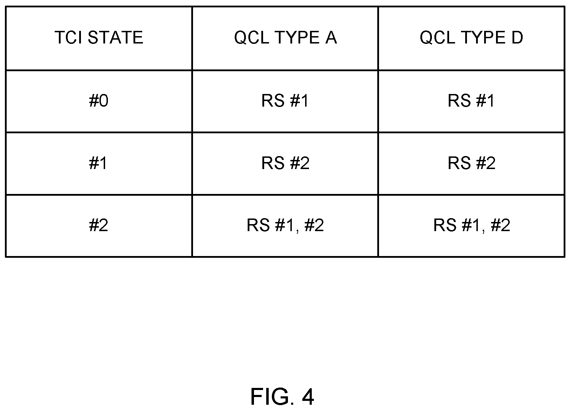

FIG. 4 is a diagram to show an example of the TCI state for configuring the QCL properties for a PDCCH in Embodiment 2-1. In FIG. 4, TCI state #0 indicates that the QCL properties of the QCL types A and D for RS #1 are provided. TCI state #1 indicates that the QCL properties of the QCL types A and D for RS #2 are provided. TCI state #2 indicates that the QCL properties of the QCL types A and D for both RS #1 and RS #2 are provided.

Using FIG. 1 already described, a base station transmit beam assumable by the UE in application to RS of FIG. 4 will be described. The UE may assume that different beams are applied to each TCI state. The UE may assume that RS #1 in TCI state #0 and RS #2 in TCI state #1 are transmitted using different beams.

The UE may assume that a beam applied to the TCI state corresponding to the plurality of RSs corresponds to a beam (a combined beam) obtained by combination of beams of respective RSs. For example, it may be assumed that the beam (the beam applied to TCI state #2) across RS #1 and RS #2 as shown in FIG. 1 is based on the beam obtained by combination of the beam applied to RS #1 and the beam applied to RS #2.

### <Embodiment 2-2>

In Embodiment 2-2, the configured TCI state may include (in other words, may be associated with RS with) any or both of up to one RS for the QCL type A and up to one RS for the QCL type D.

In Embodiment 2-2, one TCI state may be active, or more than one TCI state may be active.

A given MAC CE may indicate to activate more than one TCI state for given CORESET. The UE may activate, according to the received given MAC CE, more than one TCI state for a given CORESET. The given MAC CE may be the same as an existing TCI state indication for UE-specific PDCCH MAC CE, or may be enhanced or corrected MAC CE. The given MAC CE may include a bitmap indicating the TCI state to be activated (or the active TCI state).

The given MAC CE may indicate to activate more than one TCI state for a given CORESET. The UE may assume that unless the TCI state activated once is deactivated (e.g., unless it is indicated that the TCI state is not active by using a MAC CE), the TCI state is maintained in active. The UE may assume that unless another TCI state is activated (e.g., unless it is indicated to activate a different TCI state by using a MAC CE), the TCI state is maintained in active.

For example, in a case where after TCI state #0 is activated by a first MAC CE, TCI state #1 is activated by a second MAC CE, both of TCI states #0 and #1 are active.

In a case where more than one TCI state is active in a CORESET, the UE may assume that DMRS for PDCCH of the CORESET has the same QCL properties as those of all RSs in all active TCI states for the CORESET with respect to the corresponding QCL type.

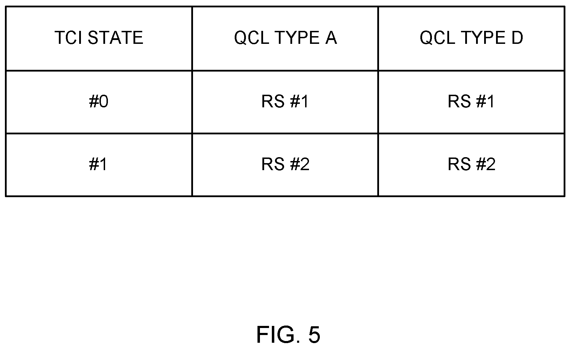

FIG. 5 is a diagram to show an example of the TCI state for configuring the QCL properties for PDCCH in Embodiment 2-2. In FIG. 5, TCI state #0 indicates that the QCL properties of the QCL types A and D for RS #1 are provided. TCI state #1 indicates that the QCL properties of the QCL types A and D for RS #2 are provided. The base station transmit beam assumable by the UE in application to RS of FIG. 5 may be described with reference to FIG. 1 already described.

A case where only TCI state #0 is active, a case where only TCI state #1 is active, and a case where both of TCI states #0 and #1 are active are conceivable. In the case where both of TCI states #0 and #1 are active, the UE may receive a PDCCH based on RS #1 and RS #2.

According to the second embodiment described above, the UE can preferably receive a PDCCH in association with the combined beam across the plurality of RSs. Such PDCCH may be transmitted using the combined beam.

### <Third Embodiment>

A third embodiment relates to reception of a PDSCH.

In a case where a higher layer parameter ("tci-PresentInDCI") indicating that TCI is present in DCI is not configured (in other words, is not enabled), or a case where a time difference between a PDCCH (DCI) for scheduling a PDSCH and the PDSCH is less than a given threshold (e.g., the above-described scheduling offset threshold), the UE may assume that the PDSCH is QCLed with a CORESET having the lowest CORESET-ID of the latest slot. Note that DCI in the third embodiment may be DL DCI.

In a case where the higher layer parameter ("tci-PresentInDCI") indicating that TCI is present in DCI is configured (in other words, is enabled), and the time difference between a PDCCH (DCI) for scheduling a PDSCH and the PDSCH is not less than the given threshold (e.g., the above-described scheduling offset threshold), the UE may assume that the PDSCH is QCLed with an RS in a TCI state indicated by a TCI field included in the DCI.

Here, the TCI field may be constituted (or configured) so that a plurality of TCI states can be indicated.

The TCI field may indicate one TCI state. In this case, one TCI state may include (in other words, may be associated with) any or all of more than one RS for the QCL type A and more than one RS for the QCL type D.

For the QCL properties of DMRS of PDSCH, the UE may perform control equivalent to contents of the above-described second embodiment in which the "active TCI state" is interpreted as a "TCI state indicated by the TCI field of DCI," and the "PDCCH" is interpreted as a "PDSCH."

For example, in a case where the TCI state indicated by the TCI field of DCI includes more than one RS for the QCL type A or D, the UE may assume that a DMRS for PDSCH has the same QCL properties as those of all RSs in the above-described TCI state with respect to the corresponding QCL type.

In a case where the plurality of TCI states are indicated by the TCI field of DCI, the UE may assume that the DMRS for PDSCH has the same QCL properties as those of all RSs in all of the plurality of TCI states with respect to the corresponding QCL type.

According to the third embodiment described above, the UE can preferably receive a PDSCH in association with a combined beam across the plurality of RSs. The PDSCH may be transmitted using the combined beam.

### <Fourth Embodiment>

A fourth embodiment relates to reception of a PUSCH.

The fourth embodiment can be broadly classified as follows according to a PUSCH:
- Embodiment 4-1: PUSCH scheduled by UL grant of RAR;
- Embodiment 4-2: retransmission of UL grant PUSCH (PUSCH of Embodiment 4-1) of RAR scheduled by DCI format 0_0;
- Embodiment 4-3: PUSCH scheduled by DCI format 0_0 after a dedicated PUCCH resource configuration has been acquired;
- Embodiment 4-4: PUSCH scheduled by DCI format 0_1 without an SRS resource indicator (SRI) field; and
- Embodiment 4-5: PUSCH scheduled by DCI format 0_1 with an SRI field or configured grant PUSCH for which an SRS resource indicator (an RRC parameter "srs-ResourceIndicator") is configured in a configured grant configuration (an RRC information element "ConfiguredGrantConfig").
Note that a PUSCH in each embodiment may be interpreted as the above-described corresponding PUSCH.

Here, DCI formats 0_0 and 0_1 may be each interpreted as DCI for scheduling a PUSCH. DCI format 0_0 may be equivalent to DCI that a field(s) included in the DCI does not depend on the configuration of RRC or DCI common to the UE. DCI format 0_1 may be equivalent to DCI that a field(s) included in the DCI depends on the configuration of RRC or DCI specific to the UE.

### <Embodiment 4-1>

In Embodiment 4-1, the UE may apply the same spatial relation (or SRI) as that applied to PRACH transmission to a PUSCH. For example, the UE may determine the spatial relation based on one or more DL RSs (e.g., one or more SSBs) used for determining a PRACH resource.

The UE may determine the transmission power of PUSCH, based on a pathloss value PL estimated using one or more DL RSs (e.g., one or more SSBs) used for determining the PRACH resource. In other words, the UE may use these DL RSs for estimation of PL for PUSCH power control.

Note that as described in the first embodiment, PRACH transmission before a PUSCH scheduled by the UL grant of RAR may be associated with more than one SSB.

The DL RS as described throughout the fourth embodiment may correspond to a plurality of RSs transmitted using a combined beam.

In the present disclosure, "apply the same spatial relation as that of X to Y" (X, Y are channels/signals and the like) and "transmit Y by using the same spatial domain transmit filter as that of X" may be interchangeably interpreted.

In Embodiment 4-1, the UE may apply an arbitrary preferable spatial relation (or SRI) for PUSCH to the PUSCH (i.e., the UE may autonomically determine the spatial relation used for PUSCH). In this case, the UE may determine the transmission power of PUSCH, based on the pathloss value PL estimated using one or more DL RSs used for determining the PRACH resource. Alternatively, the UE may determine the transmission power of PUSCH, based on the pathloss value PL estimated using DL RS relevant to the spatial relation for PUSCH.

### <Embodiment 4-2>

In Embodiment 4-2, the UE may apply the same spatial relation (or SRI) as that applied to the PRACH transmission to the PUSCH. In this case, the UE may determine the transmission power of PUSCH, based on the pathloss value PL estimated using one or more DL RSs (e.g., one or more SSBs) used for determining the PRACH resource.

In Embodiment 4-2, the UE may apply the same spatial relation (or SRI) as that applied to initial PUSCH transmission to the PUSCH. In this case, the UE may determine the transmission power of PUSCH, based on the pathloss value PL estimated using one or more DL RSs used for determining the PRACH resource. Alternatively, the UE may use a DL RS used for pathloss estimation for power control of initial transmission of the PUSCH, to pathloss estimation for transmission power control of the PUSCH.

In Embodiment 4-2, the UE may apply an arbitrary preferable spatial relation (or SRI) for PUSCH to the PUSCH. In this case, the UE may determine the transmission power of PUSCH, based on the pathloss value PL estimated using one or more DL RSs used for determining the PRACH resource. Alternatively, the UE may determine the transmission power of PUSCH, based on the pathloss value PL estimated using DL RS relevant to the spatial relation for PUSCH.

### <Embodiment 4-3>

In Embodiment 4-3, the UE may apply the same spatial relation (or SRI) as that applied to a specific PUCCH resource to the PUSCH. Here, the specific PUCCH resource may be, for example, a PUCCH resource having the lowest ID (a PUCCH resource ID).

In this case, the UE may determine the transmission power of PUSCH, based on the pathloss value PL estimated using one or more DL RSs (e.g., one or more SSBs) used for determining the PRACH resource. Alternatively, the UE may determine the transmission power of PUSCH, based on the pathloss value PL estimated using DL RS relevant to the specific PUCCH resource.

In Embodiment 4-3, the UE may apply the same spatial relation (or SRI) as that applied to a specific SRS resource to the PUSCH. Here, the specific SRS resource may be, for example, an SRS resource having the lowest ID (an SRS resource ID).

In this case, the UE may determine the transmission power of PUSCH, based on the pathloss value PL estimated using one or more DL RSs (e.g., one or more SSBs) used for determining the PRACH resource. Alternatively, the UE may determine the transmission power of PUSCH, based on the pathloss value PL estimated using DL RS relevant to the specific SRS resource.

In Embodiment 4-3, the UE may apply the same spatial relation (or SRI) as that applied to a specific SRS resource set to the PUSCH. Here, the specific SRS resource set may be, for example, an SRS resource set having the lowest ID (an SRS resource set ID).

In this case, the UE may determine the transmission power of PUSCH, based on the pathloss value PL estimated using one or more DL RSs (e.g., one or more SSBs) used for determining the PRACH resource. Alternatively, the UE may determine the transmission power of PUSCH, based on the pathloss value PL estimated using DL RS relevant to the specific SRS resource set.

### <Embodiment 4-4>

In Embodiment 4-4, the UE may apply the same spatial relation (or SRI) as that applied to a specific PUCCH resource to the PUSCH. Here, the specific PUCCH resource may be, for example, a PUCCH resource having the lowest ID (a PUCCH resource ID).

In this case, the UE may determine the transmission power of PUSCH, based on the pathloss value PL estimated using one or more DL RSs (e.g., one or more SSBs) used for determining the PRACH resource. Alternatively, the UE may determine the transmission power of PUSCH, based on the pathloss value PL estimated using DL RS relevant to the specific PUCCH resource.

In Embodiment 4-4, the UE may apply the same spatial relation (or SRI) as that applied to a specific SRS resource to the PUSCH. Here, the specific SRS resource may be, for example, an SRS resource having the lowest ID (an SRS resource ID).

In this case, the UE may determine the transmission power of PUSCH, based on the pathloss value PL estimated using one or more DL RSs (e.g., one or more SSBs) used for determining the PRACH resource. Alternatively, the UE may determine the transmission power of PUSCH, based on the pathloss value PL estimated using DL RS relevant to the specific SRS resource.

In Embodiment 4-4, the UE may apply the same spatial relation (or SRI) as that applied to a specific SRS resource set to the PUSCH. Here, the specific SRS resource set may be, for example, an SRS resource set having the lowest ID (an SRS resource set ID).

In this case, the UE may determine the transmission power of PUSCH, based on the pathloss value PL estimated using one or more DL RSs (e.g., one or more SSBs) used for determining the PRACH resource. Alternatively, the UE may determine the transmission power of PUSCH, based on the pathloss value PL estimated using DL RS relevant to the specific SRS resource set.

### <Embodiment 4-5>

In Embodiment 4-5, the UE may apply, to a PUSCH, the spatial relation (or SRI) indicated by the SRI field included in DCI format 0_1 or configured by an SRS resource indicator ("srs-ResourceIndicator") included in the configured grant configuration.

In this case, the UE may determine the transmission power of PUSCH, based on the pathloss value PL estimated using one or more DL RSs (e.g., one or more SSBs) associated with the spatial relation (or SRI) indicated by the SRI field of DCI or configured by the SRS resource indicator of the configured grant configuration.

The UE may use a precoder for SRS as a precoder (a transmit precoder) for PUSCH. In other words, the precoder for PUSCH may be determined based on the spatial relation (or SRI) indicated by the SRI field of DCI or configured by the SRS resource indicator of the configured grant configuration.

The UE may determine (or calculate) the precoder for SRS, based on measurement of one or more associated DL RSs (e.g., SSBs, CSI-RSs) as described above. Here, more than one NZP CSI-RS (or SSBs) may be configured for each SRS resource set, or one value of SRI may indicate more than one SRS resource (or SRS resource set).

In a case where the number of NZP CSI-RS (or SSB) resources associated with a certain SRS resource set is greater than one, the UE may determine the precoder for the SRS such that an SRS to be precoded is associated with more than one NZP CSI-RS (or more than one corresponding SSB).

For PUSCH transmission, in a case where the spatial relation (or SRI) indicated by the SRI field of DCI or configured by the SRS resource indicator of the configured grant configuration indicates more than one SRS resource (or SRS resource set), the UE may determine the precoder for the PUSCH such that the PUSCH to be precoded is associated with more than one SRS resource (or SRS resource set), i.e., is associated with more than one NZP CSI-RS (or more than one corresponding SSB).

Note that in a case where the spatial relation (or SRI) indicated by the SRI field of DCI or configured by the SRS resource indicator of the configured grant configuration indicates more than one SRS resource (or SRS resource set), the transmission power of the PUSCH may be determined, based on the pathloss value PL estimated using one or more DL RSs (e.g., one or more SSBs) associated with the SRS resources (or the SRS resource set).

The pathloss value used for determination of the PUSCH transmission power as described in the fourth embodiment may be a specific value based on a plurality of pathloss values estimated by each of the plurality of DL RSs. For example, the specific value may be the maximum value of the plurality of pathloss values, the minimum value of the plurality of pathloss values, the average of the plurality of pathloss values, an arbitrary value between the minimum value and the maximum value, or an arbitrary value of the plurality of pathloss values.

According to the fourth embodiment described above, the UE can preferably transmit a PUSCH in association with the combined beam across the plurality of RSs. The PUSCH may be transmitted using the combined beam.

### <Fifth Embodiment>

A fifth embodiment relates to reception of a PUCCH.

The fifth embodiment can be broadly classified as follows according to a PUCCH:
- Embodiment 5-1: PUCCH before an RRC configuration (a "PUCCH-SpatialRelationInfo" information element) of PUCCH spatial relation information is available; and
- Embodiment 5-2: PUCCH after the RRC configuration (a "PUCCH-SpatialRelationInfo" information element) of the PUCCH spatial relation information is available.

Note that the PUCCH in each embodiment may be interpreted as the above-described corresponding PUCCH.

### <Embodiment 5-1>

In Embodiment 5-1, the UE may apply the same spatial relation (or SRI) as that applied to the PUSCH scheduled by UL grant of RAR (and therefore a PRACH corresponding to the RAR) to the PUCCH.

A spatial domain transmit filter for PUCCH transmission may be associated with more than one CSI-RS (or more than one corresponding SSB). For PUCCH transmission, in a case where the number of associated SSBs/CSI-RSs is greater than one, the UE may determine a precoder for the PUCCH such that the PUCCH to be precoded is associated with more than one SSB/CSI-RS.

### <Embodiment 5-2>

In Embodiment 5-2, in a case where PUCCH spatial relation information (a "PUCCH-SpatialRelationInfo" information element) provides one or more SSB indices ("ssb-index") (i.e., the UE is configured with the spatial relation information about one or more SSBs and the PUCCH), the PUCCH may be transmitted using the same spatial domain filter as that applied to reception of SSB corresponding to one or more SSB indices.

In Embodiment 5-2, in a case where the PUCCH spatial relation information (the "PUCCH-SpatialRelationInfo" information element) provides one or more CSI-RS resource indices ("csi-RS-Index"/"NZP-CSI-RS-ResourceId") (i.e., the UE configures the spatial relation information about one or more CSI-RSs and the PUCCH), the PUCCH may be transmitted using the same spatial domain filter as that applied to reception of CSI-RS corresponding to one or more CSI-RS resource indices.

In Embodiment 5-2, in a case where the PUCCH spatial relation information (the "PUCCH-SpatialRelationInfo" information element) provides one or more SRS resource indices ("SRS-ResourceId" included in "srs") (i.e., the UE is configured with the spatial relation information about one or more SRSs and the PUCCH), the PUCCH may be transmitted using the same spatial domain filter as that applied to transmission of SRS corresponding to one or more SRS resource indices.

Note that in a case where the PUCCH spatial relation information includes serving cell ID information ("servingCellId"), an RS indicated by the PUCCH spatial relation information may be an RS of a serving cell indicated by the serving cell ID information, and if not, may be an RS of a serving cell for which the PUCCH spatial relation information is configured.

In a case where the PUCCH spatial relation information includes UL BWP information (a BWP ID of "uplinkBWP"), an RS (particularly, SRS) indicated by the PUCCH spatial relation information may be an RS of UL BWP indicated by the UL BWP information, and if not, may be an RS of an active UL BWP.

According to the fifth embodiment described above, the UE can preferably transmit the PUCCH in association with the combined beam across the plurality of RSs. The PUCCH may be transmitted using the combined beam.

### <Sixth Embodiment>

A sixth embodiment relates to UE capability.

The UE may transmit given capability information (UE capability information) to a base station. The above-described various embodiments may assume that the UE is utilized in a case where the given capability information is reported.

The given capability information may be capability information indicating that a combined beam can be received or transmitted.

The given capability information may be capability information on the maximum number of RSs having at least one of different QCLs (or QCL types) that can be combined (for generating a wide beam), different TCI states, or different spatial relations (or SRIs).

Processing time about at least one of a PDCCH, a PDSCH, a PUCCH, or a PUSCH may be different values based on the given capability information (e.g., the above-described maximum number of RSs which can be combined).

The base station may transmit information for enabling the combined beam to the UE having reported the given capability information by using higher layer signaling, physical layer signaling, or a combination thereof. It may be assumed that the UE having received the information for enabling the combined beam may operate according to at least one of the above-described various embodiments and the UE having not received the information for enabling the combined beam cannot operate according to the above-described various embodiments.

It is not necessarily expected that the UE not transmitting the given capability information operates according to the above-described various embodiments.

According to the sixth embodiment described above, processing about the combined beam can be properly controlled.

### <Other>

Note that only any one of various embodiments may be utilized, or multiple embodiments (e.g., all) may be utilized. For example, only any one of Embodiments 4-1 to 4-5 may be utilized, or multiple ones may be utilized (an appropriate embodiment for each of different PUSCHs may be employed).

Various embodiments may be assumed as being utilized in a case where the UE is configured with URLLC by the higher layer signaling (configured to operate for URLLC), or may be utilized even in a case where no URLLC is not configured.

### (Radio Communication System)

Hereinafter, a structure of a radio communication system according to one embodiment of the present disclosure will be described. In this radio communication system, communication is performed using any of the radio communication methods according to each embodiment of the present disclosure described above or a combination thereof.

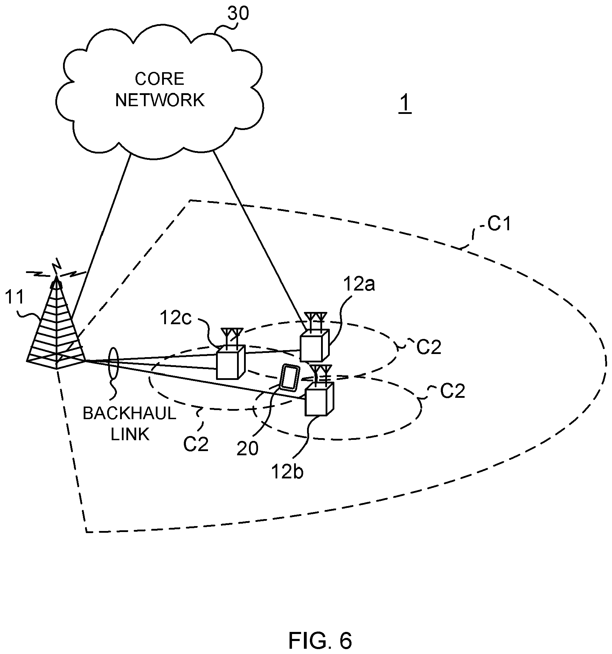

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) or a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

### (Base Station)

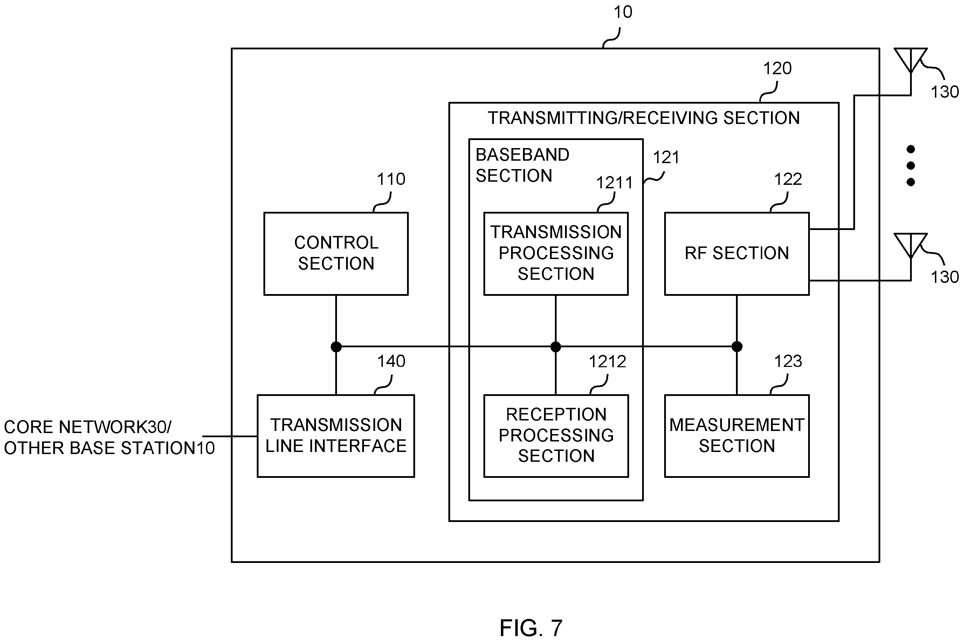

FIG. 7 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit a reference signal (e.g., SSB, CSI-RS).

The control section 110 may appreciate, based on one or more PRACHs transmitted from the user terminal 20, that the user terminal 20 has selected a plurality of reference signals (e.g., a set of SSBs). The control section 110 may transmit a channel/signal by using a combined beam to the user terminal 20 having selected the plurality of reference signals.

### (User Terminal)

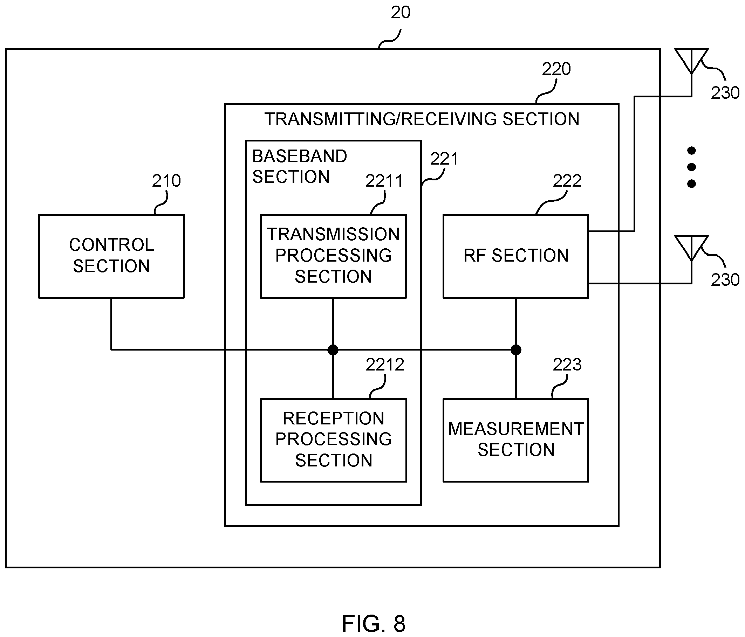

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be constituted as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (the RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (the RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (the measurement section 223) may perform measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a reference signal (e.g., SSB, CSI-RS).

The control section 210 may select the plurality of reference signals, and may perform control for transmitting a random access preamble (PRACH) corresponding to the selected plurality of reference signals. As described later, such a random access preamble may be one or more. The plurality of reference signals may be referred to as a set of reference signals (a set of RSs).

The control section 210 may perform control for transmitting one random access preamble corresponding to the selected plurality of reference signals by using one physical random access channel resource (a PRACH resource) associated with the selected plurality of reference signals.

The control section 210 may perform the control for transmitting one random access preamble corresponding to a first reference signal of the selected plurality of reference signals by using a physical random access channel resource associated with the first reference signal and transmitting one random access preamble corresponding to a second reference signal of the selected plurality of reference signals by using a physical random access channel resource associated with the second reference signal. In other words, the control section 210 may perform the control for transmitting a plurality of random access preambles associated with RSs in a set of plurality of RSs by separate PRACH resources.

The control section 210 may determine the transmission power for one or more random access preambles corresponding to the selected plurality of reference signals, based on a pathloss value estimated by each of the selected plurality of reference signals.

The control section 210 may assume that a random access response to one or more random access preambles corresponding to the selected plurality of reference signals has the same quasi-co-location (QCL) property as that of the selected plurality of reference signals.

The control section 210 may determine, for a given CORESET, the QCL properties of DMRS for PDCCH based on an active TCI state corresponding to (a set of) the plurality of reference signals. The transmitting/receiving section 220 may receive (detect) the PDCCH (and therefore DCI), based on the QCL property.

The plurality of reference signals may correspond to at least one of more than one reference signal for the QCL type A and more than one reference signal for the QCL type D in one TCI state. In this case, the control section 210 may assume that the DMRS has the same QCL property as that of all reference signals in one active TCI state.

Note that the QCL types such as the QCL types A and D in the present disclosure may be interpreted as arbitrary QCL types.

One TCI state may include up to one reference signal for the QCL type A and up to one reference signal for the QCL type D. In this case, the control section 210 may assume that the DMRS has the same QCL property as that of all reference signals in a plurality of active TCI states.

In a case where a higher layer parameter ("tci-PresentInDCI") indicating that a TCI field is present in downlink control information (e.g., DCI format 1_1) for scheduling the PDSCH is configured "enabled" and a time difference between the PDCCH receiving the downlink control information and the PDSCH is not less than a given threshold, the control section 210 may assume that the PDSCH is QCLed with the reference signal in the TCI state indicated by the TCI field. Note that the TCI field may indicate a plurality of TCI states.

The control section 210 may determine the transmission power of PUSCH, based on one or more pathloss values estimated using (a set of) the plurality of reference signals associated with a given uplink channel (e.g., PRACH, PUCCH) or uplink reference signal (e.g., SRS). The transmitting/receiving section 220 may transmit the PUSCH by using the transmission power.

The control section 210 may perform the control for applying the same spatial relation as that applied to PRACH transmission to the PUSCH.

In a case where the PUSCH is of retransmission, which is scheduled by DCI format 0_0, of PUSCH (RAR UL grant PUSCH) based on the uplink grant of the random access response, the control section 210 may perform the control for applying the same spatial relation as that applied to initial PUSCH transmission to the PUSCH.

In a case where the PUSCH is a PUSCH scheduled by DCI format 0_1 including an SRS resource indicator (an "SRS resource indicator" field) or configured grant PUSCH (in other words, PUSCH transmissions with a configured grant) for which an SRS resource indicator (a higher layer parameter "srs-ResourceIndicator") is configured, the control section 210 may determine that a precoder for the PUSCH is associated with one SRS resource set for which a plurality of reference signals corresponding to the SRS resource indicator are configured, or a plurality of SRS resources corresponding to the SRS resource indicator.

In a case where PUCCH spatial relation information (a "PUCCH-SpatialRelationInfo" information element) provides the indices of a plurality of reference signals (e.g., SSBs, CSI-RSs, SRSs), the control section 210 may transmit the PUCCH by using the same spatial domain filter as that applied to reception or transmission of a reference signal corresponding to the indices of the plurality of reference signals.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

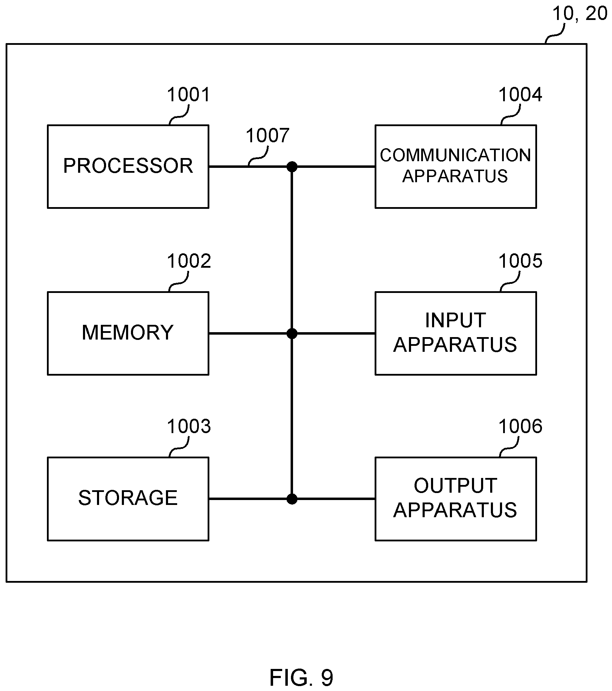

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a control section that determines transmission power of a physical uplink shared channel (PUSCH) based on a pathloss value estimated using a plurality of reference signals associated with a given uplink channel or uplink reference signal; and
a transmitting section that transmits the PUSCH by using the transmission power.

2. The user terminal according to claim 1, wherein the control section performs a control for applying, to the PUSCH, a same spatial relationship as a spatial relationship applied to physical random access channel (PRACH) transmission.

3. The user terminal according to claim 1, wherein when the PUSCH is of retransmission, which is scheduled by DCI format 0_0, of PUSCH based on an uplink grant of a random access response, the control section performs a control for applying, to the PUSCH, a same spatial relation as a spatial relation applied to initial transmission of the PUSCH to the PUSCH.

4. The user terminal according to claim 1, wherein when the PUSCH is a PUSCH scheduled by DCI format 0_1 including a sounding reference signal (SRS) resource indicator or a configured grant PUSCH for which an SRS resource indicator is configured, the control section determines that a precoder for the PUSCH is associated with one SRS resource set for which a plurality of reference signals corresponding to the SRS resource indicator are configured or a plurality of SRS resources corresponding to the SRS resource indicator.

5. The user terminal according to any one of claims 1 to 4, wherein when physical uplink control channel (PUCCH) spatial relation information provides indices of a plurality of reference signals, the transmitting section transmits the PUCCH by using a same spatial domain filter as a spatial domain filter applied to reception or transmission of the reference signals corresponding to the indices of the plurality of reference signals.

6. A radio communication method of a user terminal, the radio communication method comprising:
determining transmission power of a physical uplink shared channel (PUSCH) based on a pathloss value estimated using a plurality of reference signals associated with a given uplink channel or uplink reference signal; and
transmitting the PUSCH by using the transmission power.
